# EUROPEAN PATENT SPECIFICATION

(11) **EP 2 681 646 B1**
(45) Date of publication and mention of the grant of the patent: **13.02.2019**
(21) Application number: 12752095.5
(22) Date of filing: 21.02.2012
(51) Int. Cl.: G06F 3/041, G06F 3/048

(54) **ELECTRONIC APPARATUS, DISPLAY METHOD, AND PROGRAM**
ELEKTRONISCHE VORRICHTUNG, ANZEIGEVORRICHTUNG UND PROGRAMM DAFÜR
APPAREIL ÉLECTRONIQUE, PROCÉDÉ D'AFFICHAGE ET PROGRAMME

(30) Priority: 28.02.2011 JP 2011042909
(43) Date of publication of application: 08.01.2014
(73) Proprietor: Sony Corporation, Tokyo 108-0075 (JP)
(72) Inventor: NISHIKAWA, Kenzo, Tokyo 108-0075 (JP); NUNOMAKI, Takashi, Tokyo 108-0075 (JP); AMANO, Ryoko, Tokyo 108-0075 (JP); TAKAOKA, Lyo, Tokyo 108-0075 (JP); KANO, Ritsuko, Tokyo 108-0075 (JP); NARITA, Tomoya, Tokyo 108-0075 (JP); KASAHARA, Shunichi, Tokyo 108-0075 (JP)
(74) Representative: D Young & Co LLP
(86) International application number: PCT/JP2012/001143
(87) International publication number: WO 2012/117690

(56) References cited:
- EP-A2- 2 105 826
- WO-A1-2009/031633
- JP-A- 2002 297 283
- JP-A- 2007 133 909
- JP-A- 2010 128 685
- US-A1- 2006 161 871
- US-A1- 2011 016 390

## Description

### Technical Field

The present disclosure relates to an electronic apparatus, a display method, and a program, and particularly, to an electronic apparatus, a display method, and a program appropriately used in the case where a user interface is displayed on the display unit on which the touch panel is laminated and provided.

### Background Art

Conventionally, there are various types of electronic apparatuses configured to display a user interface for receiving an operation from a user on a display unit on which a touch panel is laminated. Specifically, the electronic apparatuses are applied to, for example, personal computers, smart phones, car navigation (car navigation) devices, ATMs (Automated teller machines), and the like.

In addition, the touch panel is able to not only detect the touch of a user's finger or the like but also detect the approach of the user's finger or the like (a capacitance type touch panel).

As a touch panel capable of detecting the approach of the user's finger or the like, for example, there is proposed a touch panel used in a car navigation apparatus and the like, and the touch panel normally displays a map on a screen and displays buttons for operation input at prescribed positions on the screen when the user's finger or the like approaches thereto (refer to Patent Document 1).

### Citation List

### Patent Literature

[PTL 1] JP-A-2002-358162
[PTL 2] EP 2015-826-A2 discloses a mobile terminal. The mobile terminal includes a display including a touchscreen, and a controller for selecting information displayed on the touchscreen according to a state of an object in near-proximity to the displayed information.

### Summary of Invention

### Technical Problem

The electronic apparatus having the display unit, on which the touch panel is laminated, is able to easily change a user interface. For example, in a case of displaying plural buttons as options, it is possible to change the sizes of the buttons in accordance with the number of buttons which are simultaneously displayed.

However, when the number of buttons which are simultaneously displayed is large, the size of each button is reduced, and the spaces between the buttons are narrowed. In such a case, sometimes, there may be a problem with operability such as an erroneous operation which is caused when a user does not select (touch) a desired button.

The present disclosure has been made in view of the above situation, and has an object to improve the operability of the user interface which is formed by laminating the touch panel on the display unit.

### Solution to Problem

This invention broadly comprises an apparatus, a method, and a computer readable medium encoded with a program which causes a processor to perform the method. In one embodiment, an apparatus includes an object approach determining unit and a display control unit. The object approach determining unit is configured to determine an approach of an object based on received data. The display control unit is configured to control a display to display a plurality of selectable icons. The display control unit is configured to control the display to change the display of the plurality of selectable icons to display only a portion of the plurality of selectable icons when the object approach determining unit determines that the object is close to the display.

### Advantageous Effects of Invention

According to the aspect of the present disclosure, it is possible to improve operability of the user interface which is formed by laminating the touch panel on the display unit.

### Brief Description of Drawings

Fig. 1 is a block diagram illustrating an exemplary configuration of an electronic apparatus according to an embodiment.
Fig. 2 is a diagram illustrating functional blocks of a control section of Fig. 1.
Fig. 3 is a flowchart illustrating processing of adaptively displaying buttons.
Figs. 4A to 4C are diagrams illustrating a first display example of the processing of adaptively displaying buttons.
Figs. 5A to 5C are diagrams illustrating a second display example of the processing of adaptively displaying buttons.
Figs. 6A to 6C are diagrams illustrating a third display example of the processing of adaptively displaying buttons.
Figs. 7A to 7C are diagrams illustrating a fourth display example of the processing of adaptively displaying buttons.

### Description of Embodiments

Hereinafter, best modes for carrying out the invention (hereinafter referred to as embodiments) will be described in detail with reference to the accompanying drawings. The scope of the invention is defined by the independent claims.

### <1. Embodiment>

### Exemplary Configuration of Electronic Apparatus

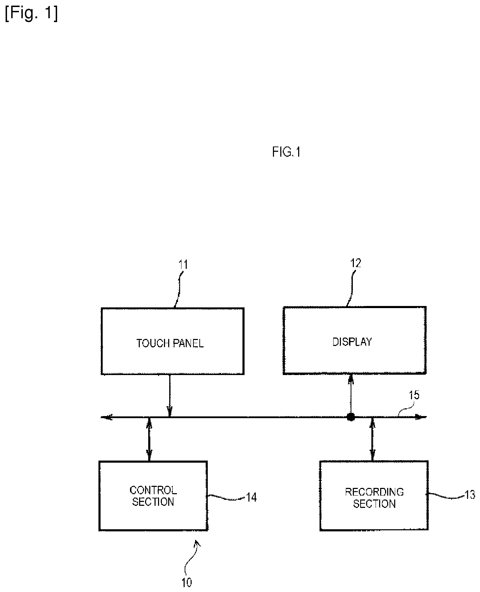

Fig. 1 is a block diagram illustrating an exemplary configuration of an electronic apparatus according to an embodiment. The electronic apparatus 10 has a user interface which is formed by laminating a touch panel on a display unit, and corresponds to, for example, a personal computer, a smart phone, a digital still camera, a digital video camera, a navigation apparatus, or the like. In addition, it is apparent that the invention can be applied to other electronic apparatuses.

The electronic apparatus 10 includes a touch panel 11 that is connected thereto through a bus 15, a display unit 12, a recording section 13, and a control section 14.

The touch panel 11 is able to transmit the screen display of the display unit 12 and detect not only the touch of the user's finger and the like but also the approach thereof (meaning that the finger approaches thereto up to a predetermined distance without touching thereon). Here, the user's finger or the like represents not only the user's finger but also another part of a body, a stylus (an indication stick having a pen shape) compatible with the touch panel 11, or the like. Hereafter, the user's finger or the like is simply referred to as the user's finger, but is defined to include another part of a body or a stylus.

As the touch panel 11, for example, a capacitance type may be employed. In addition, any type can be used if it is able to detect not only the touch of the user's finger but also the approach thereof. The touch panel 11 notifies detection information, which represents the detection result of the touch or the approach of the user's finger, to the control section 14 through the bus 15.

The display unit 12 is formed as, for example, an LCD, an organic EL display, or the like, and displays a screen image supplied from the control section 14 through the bus 15. The recording section 13 stores a program for control executed in the control section 14. Further, the recording section 13 stores various kinds of content (image data, audio data, video data, application programs, and the like) as processing targets of the corresponding electronic apparatus 10.

The control section 14 controls the entirety of the electronic apparatus 10 by executing the program for control stored in the recording section 13.

In addition to the above-mentioned configuration, the buttons, which are mechanically pressed, or the like may be provided as the user interface.

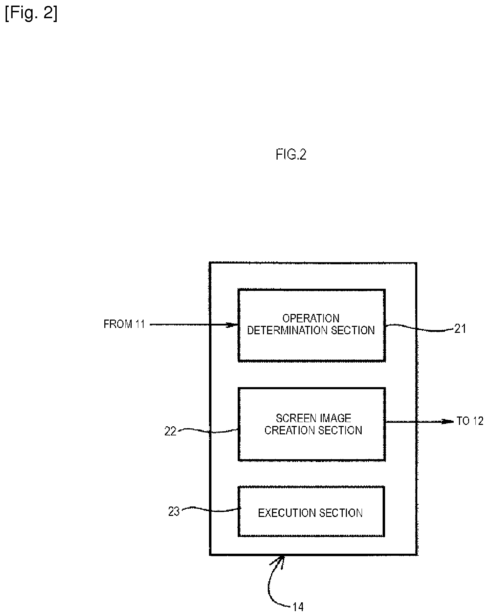

Fig. 2 shows functional blocks which are implemented in a way that the control section 14 executes the program for control.

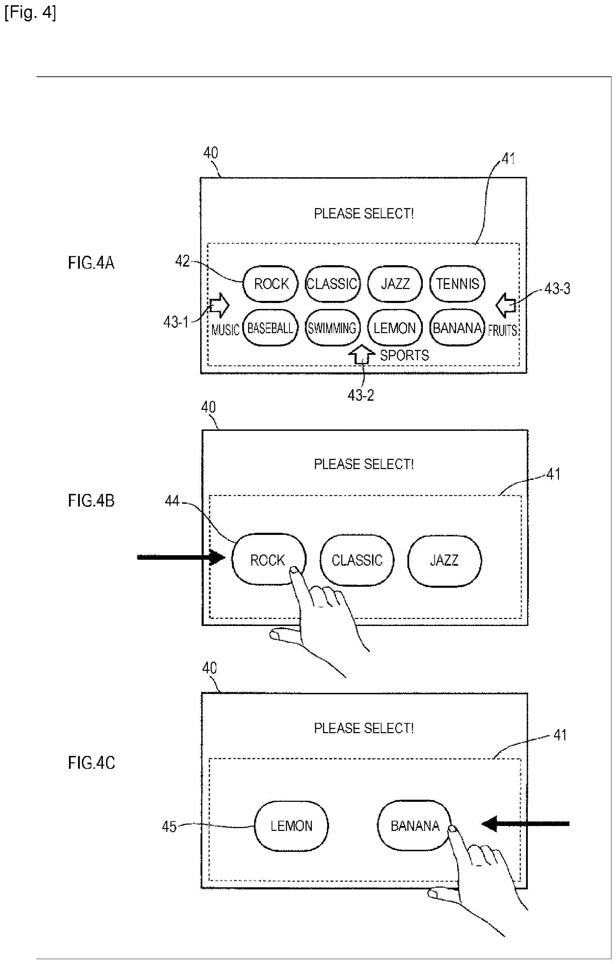

An operation determination section 21 determines user operation on the basis of the detection information sent from the touch panel 11. Specifically, on the basis of change in coordinates of the finger caused by the approach, the operation determination section may determine whether or not the finger enters into a selection area 41 (Figs. 4A to 4C) of the display unit 12, or may determine the direction of the approach or the locus of the movement. Further, the operation determination section may determine the coordinates of the touch.

The screen image generation section 22 generates an image (which includes buttons serving as the user interface and the like to be displayed on the display unit 12, and are hereinafter referred to as a screen image), and supplies the generated screen image to the display unit 12 through the bus 15. Further, the screen image generation section 22 changes the positions of the buttons on the screen image to positions, at which the user easily operates the buttons, in accordance with the determined user operation (the detailed description thereof will be given later in processing of adaptively displaying the buttons). An execution section 23 executes processing corresponding to the touched buttons.

### Description of Operation

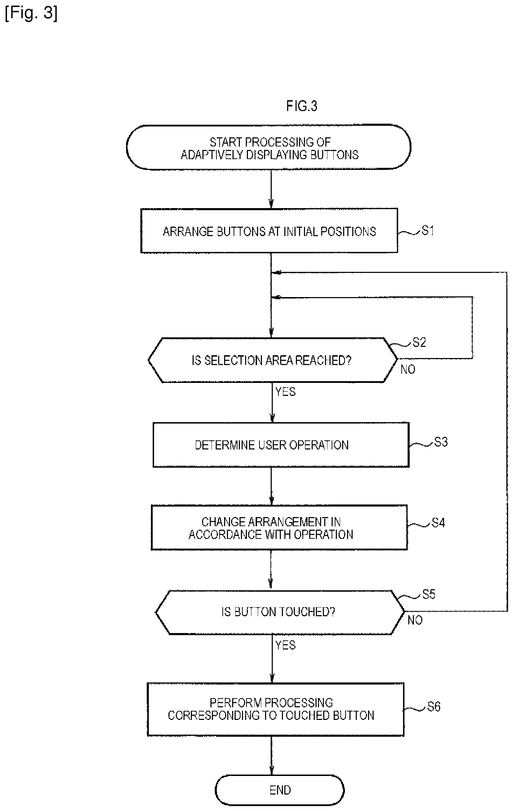

Next, the processing of adaptively displaying buttons performed by the electronic apparatus 10 will be described. Fig. 3 is a flowchart illustrating processing of adaptively displaying buttons performed by the electronic apparatus 10.

In step S1, the screen image generation section 22 generates a screen image in which the buttons as options of the user interface are arranged at initial positions, and supplies the screen image to the display unit 12 through the bus 15. The display unit 12 displays the supplies screen image.

In step S2, on the basis of the detection information sent from the touch panel 11, the operation determination section 21 determines whether or not the user's finger enters into the selection area including all the buttons displayed on the display unit 12 in a state where the finger is in close vicinity of the touch panel 11. Then, the operation determination section is on standby until it is determined that the finger enters into the area. When a user causes his finger to approach to the screen of the display unit 12, it is determined that the finger enters into the selection area, and then the processing advances to step S3.

In step S3, on the basis of the detection information sent from the touch panel 11, the operation determination section 21 determines the direction of the movement of the user's finger. In step S4, the screen image generation section 22 changes the arrangement of the buttons on the screen image in accordance with the direction of the movement of the user's finger which is determined by the operation determination section 21. That is, the screen image is updated, and is supplied to the display unit 12. Thereby, the arrangement of the buttons on the screen of the display unit 12 is changed.

In step S5, on the basis of the detection information sent from the touch panel 11, the operation determination section 21 determines whether or not the user's finger touches a button (actually, whether or not the finger touches the touch panel 11). If it is determined that the button is not touched, the processing returns to step S2, and repeats the processing therefrom.

If it is determined that the user's finger touched the button, the processing advances to step S6. In step S6, the operation determination section 21 detects the coordinates on the touch panel 11 at which the user's finger touches. The execution section 23 specifies the button touched by the user on the basis of the detected coordinates on the touch panel 11. Further, the execution section 23 performs the processing corresponding to the touched button. The processing of adaptively displaying buttons has hitherto been described.

Next, first to fourth specific display examples of the processing of adaptively displaying buttons will be described with reference to Figs. 4A to 7C.

Figs. 4A to 4C are diagrams illustrating the first display example of the processing of adaptively displaying buttons. In the first display example, the options are selected in accordance with the direction of the approach of the user's finger.

In the first step, for example, as shown in A of the drawing, plural buttons 42 respectively corresponding to the options are arranged on the screen 40 of the display unit 12. Further, arrows 43, which represent the directions of the approach of the user's finger, and categories, which serve as conditions for selecting options in accordance therewith, are displayed on the screen 40. In addition, the selection area 41 is invisible to the user, but may be configured to be visible.

In the case of A of the drawing, as the options, the buttons 42 are displayed, where the buttons respectively correspond to rock, classic, and jazz belonging to a music category, tennis, baseball, and swimming belonging to a sport category, and lemon and banana belonging to a fruit category. Further, the following are displayed: the arrow 43-1, which enters from the left side, and the text of music as the category corresponding thereto; the arrow 43-2, which enters from the lower side, and the text of sports as the category corresponding thereto; and the arrow 43-3, which enters from the right side, and the text of fruits as the category corresponding thereto.

For example, when a user moves his finger from the left side into the selection area 41 in a state where the finger is in close vicinity of the touch panel 11, as shown in B of the drawing, only the buttons 44, which correspond to the options belonging to the music category, on the screen 40 of the display unit 12 are changed. In such a case, only the buttons 44, which respectively correspond to rock, classic, and jazz belonging to the music category, are displayed by narrowing the options.

Further, for example, when a user moves his finger from the right side into the selection area 41 in a state where the finger is in close vicinity of the touch panel 11, as shown in C of the drawing, only the buttons 45, which correspond to the options belonging to the fruit category, on the screen 40 of the display unit 12 are changed. In such a case, only the buttons 45, which respectively correspond to a lemon and a banana belonging to the fruit category, are displayed by narrowing the options.

Furthermore, although not shown in the drawing, when a user moves his finger from the lower side into the selection area 41 in a state where the finger is in close vicinity of the touch panel 11, only the buttons, which correspond to tennis, baseball, and swimming belonging to the sport category, on the screen 40 of the display unit 12 are changed.

In addition, as shown in B or C of the drawing, the spaces and the sizes of the buttons 44 and 45 may be enlarged so as to be larger than those of the buttons 32 of A of the drawing.

According to the first display example shown in Figs. 4A to 4C, it is possible to reduce the number of displayed buttons in accordance with the direction of the approach of the user's finger, and thus this helps the user to easily press a button. Accordingly, it is possible to improve user operability.

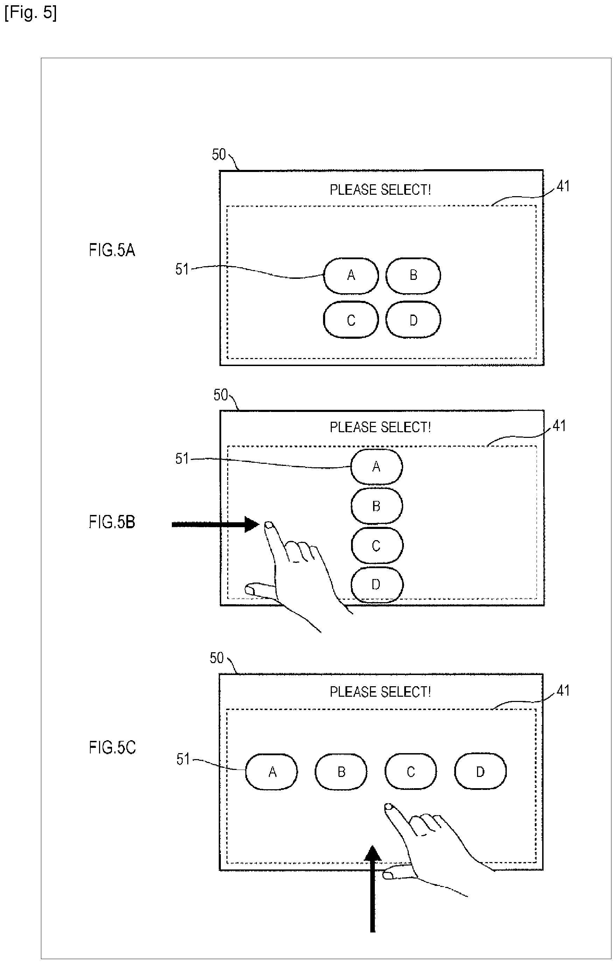

Figs. 5A to 5C show the second display example of the processing of adaptively displaying buttons. In the second display example, the direction of the arrangement of the buttons serving as the options is changed in accordance with the direction of the approach of the user's finger.

In the first step, for example, as shown in A of the drawing, plural buttons 51 respectively corresponding to the options are arranged in a matrix shape on the screen 50 of the display unit 12.

In the case of A of the drawing, the buttons 51 of A, B, C, and D respectively corresponding to the four options are arranged in a matrix shape of
**2x2.**

For example, when a user moves his finger from the left side into the selection area 41 in the state where the finger is in close vicinity of the touch panel 11, as shown in B of the drawing, the arrangement of the plural buttons 51 on the screen 50 is changed in a direction perpendicular to the direction of the approach, that is, the vertical direction. In addition, it is the same for the case where a user moves his finger from the right side into the selection area 41 in the state where the finger is in close vicinity of the touch panel 11.

Further, for example, when a user moves his finger from the lower side into the selection area 41 in the state where the finger is in close vicinity of the touch panel 11, as shown in C of the drawing, the arrangement of the plural buttons 51 on the screen 50 is changed in a direction perpendicular to the direction of the approach, that is, the horizontal direction. In addition, it is the same for the case where a user moves his finger from the upper side into the selection area 41 in the state where the finger is in close vicinity of the touch panel 11.

According to the second display example shown in Figs. 5A to 5C, the direction of the arrangement of the buttons is changed to be perpendicular to the direction of the approach of the user's finger, and thus this helps the user to easily press a button as compared with the case where the buttons are arranged in the matrix shape. Accordingly, it is possible to improve user operability.

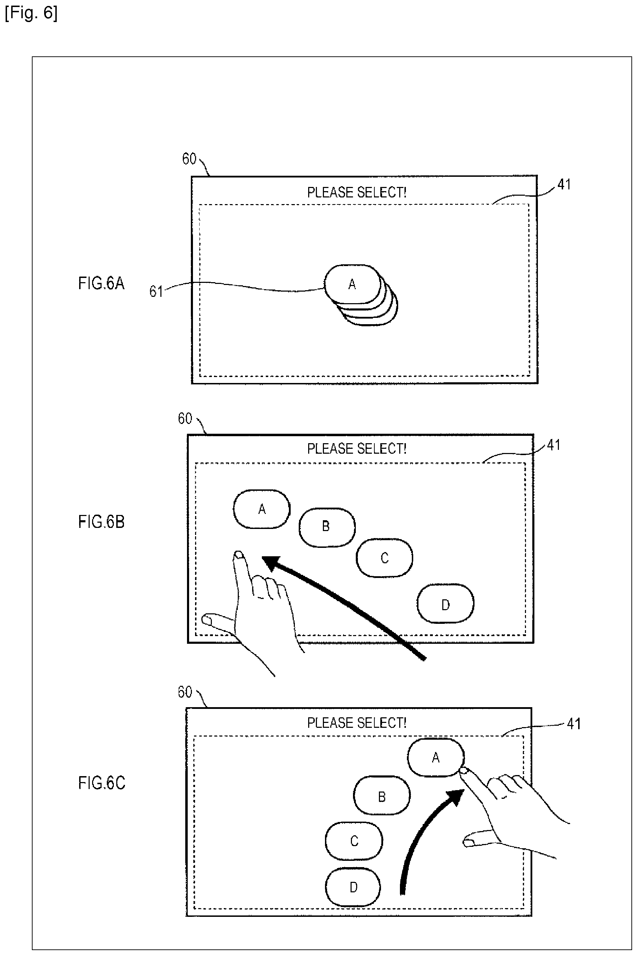

Figs. 6A to 6C show the third display example of the processing of adaptively displaying buttons. In the third display example, the direction of the arrangement of the buttons serving as the options is changed in accordance with the locus of the movement of the user's finger.

At the first step, for example, as shown in A of the drawing, plural buttons 61 respectively corresponding to the options are arranged to overlap one another on the screen 60 of the display unit 12.

In the case of A of the drawing, the buttons 61 of A, B, C, and D respectively corresponding to the four options are arranged to overlap one another.

For example, when a user moves his finger from the lower right side to the upper left side in the selection area 41 in the state where the finger is in close vicinity of the touch panel 11, as shown in B of the drawing, the arrangement of the plural buttons 61 on the screen 60 is changed in accordance with the locus of the movement.

Likewise, when a user moves his finger from the lower middle side to the upper right side in the selection area 41 in the state where the finger is in close vicinity of the touch panel 11, as shown in C of the drawing, the arrangement of the plural buttons 61 on the screen 60 is changed in accordance with the locus of the movement.

According to the third display example shown in Figs. 6A to 6C, the user is able to arbitrarily change the arrangement of the buttons by moving his finger, and thus this helps the user to easily press a button. Accordingly, it is possible to improve user operability.

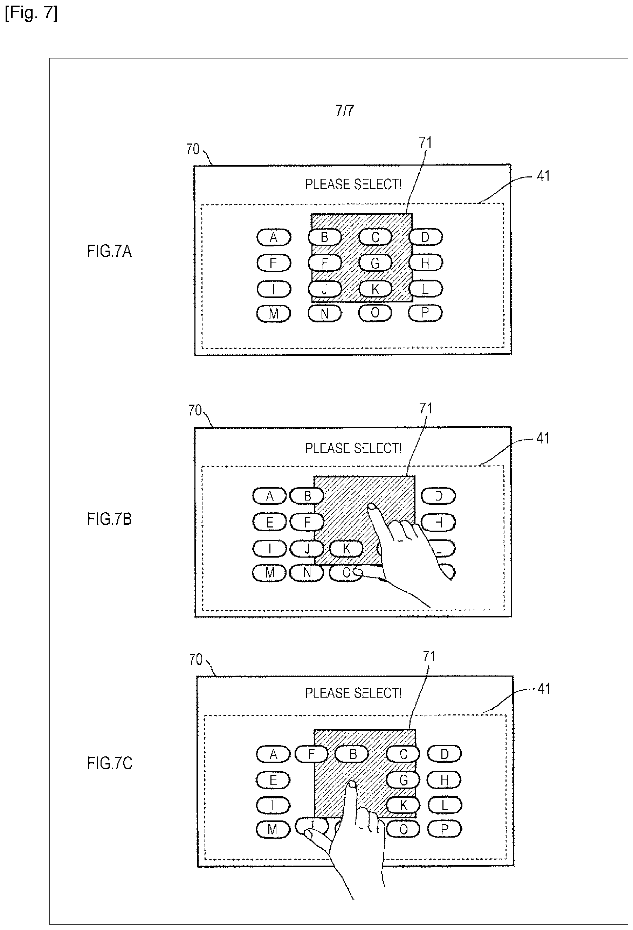

Figs. 7A to 7C show the fourth display example of the processing of adaptively displaying buttons. In the fourth display example, the direction of the arrangement of the buttons serving as the options is changed in accordance with the direction of the approach of the user's finger.

At the first step, for example, as shown in A of the drawing, plural buttons 72 respectively corresponding to the options are arranged in a matrix shape so as to overlap with the background image on the screen 70 of the display unit 12.

In the case of A of the drawing, the background includes an object 71, and the buttons 72 of A to P are arranged in a matrix shape of
**4x4**
so as to overlap with the object 71.

For example, when a user causes his finger to approach to the object 71, as shown in B or C of the drawing, the arrangement of the plural buttons 72 on the screen 70 is changed to avoid the finger.

According to the fourth display example shown in Figs. 7A to 7C, the user is able to clear away the displayed buttons by moving his finger. Accordingly, it is possible to make the background object 71 easily visible. Further, it is possible to press a button after verifying the object 71. Accordingly, it is possible to improve user operability.

However, the series of the above-mentioned processing may be executed by hardware, and may be executed by software.

In addition, the program executed by the computer may be a program which chronologically performs the processing in order of description of the present specification, and may be a program which performs the processing in parallel or at necessary timing such as the timing of calling.

Further, the program may be processed by a single computer, and may be distributively processed by plural computers. Furthermore, the program may be transmitted to a remote computer, and may be executed therein.

In addition, the embodiment of the present disclosure is not limited to the above-mentioned embodiments, and may be modified into various forms without departing from the technical scope of the invention.

## Claims

1. An apparatus(10) comprising:
an object approach determining unit (11,13) configured to determine an approach of an object based on received data; and
a display control unit (14) configured to control a display (12) to display a plurality of selectable icons (41), and the display control unit is configured to control the display to change the display of the plurality of selectable icons to display only a portion of the plurality of selectable icons when the object approach determining unit determines that the object is close to the display, **characterised in that** the portion of the plurality of selectable icons is a subset of selectable icons all belonging to a same category and is based on a direction of approach of the object.

2. The apparatus according to claim 1, wherein the display control unit controls the display to display an enlarged image of the portion of the plurality of selectable icons when the object approach determining unit determines that the object is close to the display but not touching the display.

3. The apparatus according to claim 1, wherein the display control unit controls the display to display arrow images (43) for each of a plurality of directions of approach of the object.

4. The apparatus according to claim 1, wherein the display control unit controls the display to display a category title with each of the arrow images for each of a plurality of available directions of approach of the object, each category title naming a category to which at least one of the plurality of selectable icons belongs, and the display control unit controls the display to display each of the selectable icons in a category corresponding to an actual direction of approach of the object.

5. The apparatus according to claim 4, wherein the plurality of available directions of approach of the object include a direction perpendicular to a bottom surface of the display and directions perpendicular to each of side surfaces of the display.

6. The apparatus according to claim 1, wherein the display control unit controls the display to rearrange the plurality of selectable icons on the display when the object approach determining unit determines that the object is close to the display but not touching the display.

7. The apparatus according to claim 6, wherein in a second display mode the display control unit controls the display to rearrange the plurality of selectable icons on the display along a path of the object when the object approach determining unit determines that the object passes along the path close to the display but not touching the display.

8. The apparatus according to claim 6, wherein in a third display mode the display control unit controls the display to rearrange the plurality of selectable icons on the display away from a location of the object when the object approach determining unit determines that the object is close to the display but not touching the display.

9. A method comprising:
determining, using a processor (14), an approach of an object based on received data; and
controlling a display (12) to display a plurality of selectable icons (41), the controlling including changing the display of the plurality of selectable icons to display only a portion of the plurality of selectable icons when the determining determines that the object is close to the display, **characterised in that** the portion of the plurality of selectable icons is a subset of selectable icons all belonging to a same category and is based on a direction of approach of the object.

10. A non-transitory computer readable medium encoded with a computer program that, when loaded on a processor (14), causes the processor to execute a method comprising:
determining an approach of an object based on received data; and
controlling a display (12) to display a plurality of selectable icons (41), the controlling including changing the display of the plurality of selectable icons to display only a portion of the plurality of selectable icons when the determining determines that the object is close to the display, **characterised in that** the portion of the plurality of selectable icons is a subset of selectable icons all belonging to a same category and is based on a direction of approach of the object.

## Patentansprüche

1. Vorrichtung (10), aufweisend:
eine Objektannäherungsbestimmungseinheit (11, 13), die dafür ausgelegt ist, eine Annäherung eines Objekts basierend auf empfangenen Daten zu bestimmen; und
eine Anzeigesteuereinheit (14), die dafür ausgelegt ist, eine Anzeige (12) zum Anzeigen mehrerer auswählbarer Symbole (41) zu steuern, und wobei die Anzeigesteuereinheit dafür ausgelegt ist, die Anzeige zum Ändern der Anzeige der mehreren auswählbaren Symbole zu steuern, um nur einen Abschnitt der mehreren auswählbaren Symbole anzuzeigen, wenn die Objektannäherungsbestimmungseinheit bestimmt, dass sich das Objekt in der Nähe der Anzeige befindet,
**dadurch gekennzeichnet, dass** der Abschnitt der mehreren auswählbaren Symbole eine Untergruppe auswählbarer Symbole ist, die alle zur selben Kategorie gehören, und auf einer Annäherungsrichtung des Objekts beruht.

2. Vorrichtung nach Anspruch 1, wobei die Anzeigesteuereinheit die Anzeige zum Anzeigen eines vergrößerten Bildes des Abschnitts der mehreren auswählbaren Symbole steuert, wenn die Objektannäherungsbestimmungseinheit bestimmt, dass sich das Objekt in der Nähe der Anzeige befindet, die Anzeige jedoch nicht berührt.

3. Vorrichtung nach Anspruch 1, wobei die Anzeigesteuereinheit die Anzeige zum Anzeigen von Pfeilbildern (43) für jede von mehreren Annäherungsrichtungen des Objekts steuert.

4. Vorrichtung nach Anspruch 1, wobei die Anzeigesteuereinheit die Anzeige zum Anzeigen eines Kategorientitels mit jedem der Pfeilbilder für jede von mehreren verfügbaren Annäherungsrichtungen des Objekts steuert, wobei jeder Kategorientitel eine Kategorie bezeichnet, zu welcher mindestens eines der mehreren auswählbaren Symbole gehört, und die Anzeigesteuereinheit die Anzeige zum Anzeigen jedes der auswählbaren Symbole in einer Kategorie entsprechend einer tatsächlichen Annäherungsrichtung des Objekts steuert.

5. Vorrichtung nach Anspruch 4, wobei die mehreren verfügbaren Annäherungsrichtungen des Objekts eine Richtung senkrecht zu einer unteren Fläche der Anzeige und Richtungen senkrecht zu jeder der Seitenflächen der Anzeige aufweisen.

6. Vorrichtung nach Anspruch 1, wobei die Anzeigesteuereinheit die Anzeige zum Neuanordnen der mehreren auswählbaren Symbole auf der Anzeige steuert, wenn die Objektannäherungsbestimmungseinheit bestimmt, dass sich das Objekt in der Nähe der Anzeige befindet, die Anzeige jedoch nicht berührt.

7. Vorrichtung nach Anspruch 6, wobei in einem zweiten Anzeigemodus die Anzeigesteuereinheit die Anzeige zum Neuanordnen der mehreren auswählbaren Symbole auf der Anzeige entlang eines Pfads des Objekts steuert, wenn die Objektannäherungsbestimmungseinheit bestimmt, dass das Objekt entlang des Pfads in der Nähe der Anzeige vorbeikommt, die Anzeige jedoch nicht berührt.

8. Vorrichtung nach Anspruch 6, wobei in einem dritten Anzeigemodus die Anzeigesteuereinheit die Anzeige zum Neuanordnen der mehreren auswählbaren Symbole auf der Anzeige weg von einer Position des Objekts steuert, wenn die Objektannäherungsbestimmungseinheit bestimmt, dass sich das Objekt in der Nähe der Anzeige befindet, die Anzeige jedoch nicht berührt.

9. Verfahren aufweisend:
Bestimmen, unter Verwendung eines Prozessors (14), einer Annäherung eines Objekts basierend auf empfangenen Daten; und
Steuern einer Anzeige (12) zum Anzeigen mehrerer auswählbarer Symbole (41), das Steuern aufweisend das Ändern der Anzeige der mehreren auswählbaren Symbole, um nur einen Abschnitt der mehreren auswählbaren Symbole anzuzeigen, wenn die beim Bestimmen bestimmt worden ist, dass sich das Objekt in der Nähe der Anzeige befindet,
**dadurch gekennzeichnet, dass** der Abschnitt der mehreren auswählbaren Symbole eine Untergruppe auswählbarer Symbole ist, die alle zur selben Kategorie gehören, und auf einer Annäherungsrichtung des Objekts beruht.

10. Nichtflüchtiges computerlesbares Medium kodiert mit einem Computerprogramm, welches, wenn es auf einen Prozessor (14) geladen ist, bewirkt, dass der Prozessor ein Verfahren ausführt, das Verfahren aufweisend:
Bestimmen einer Annäherung eines Objekts basierend auf empfangenen Daten; und
Steuern einer Anzeige (12) zum Anzeigen mehrerer auswählbarer Symbole (41), das Steuern aufweisend das Ändern der Anzeige der mehreren auswählbaren Symbole, um nur einen Abschnitt der mehreren auswählbaren Symbole anzuzeigen, wenn beim Bestimmen bestimmt worden ist, dass sich das Objekt in der Nähe der Anzeige befindet,
**dadurch gekennzeichnet, dass** der Abschnitt der mehreren auswählbaren Symbole eine Untergruppe auswählbarer Symbole ist, die alle zur selben Kategorie gehören, und auf einer Annäherungsrichtung des Objekts beruht.

## Revendications

1. Appareil (10) comprenant :
une unité de détermination d'approche d'objet (11, 13) configurée pour déterminer une approche d'un objet sur la base de données reçues ; et
une unité de commande de dispositif d'affichage (14) configurée pour commander un dispositif d'affichage (12) pour afficher une pluralité d'icônes sélectionnables (41) et l'unité de commande de dispositif d'affichage est configurée pour commander le dispositif d'affichage pour changer l'affichage de la pluralité d'icônes sélectionnables pour afficher seulement une partie de la pluralité d'icônes sélectionnables lorsque l'unité de détermination d'approche d'objet détermine que l'objet est près du dispositif d'affichage, **caractérisé en ce que** la partie de la pluralité d'icônes sélectionnables est un sous-ensemble d'icônes sélectionnables appartenant toutes à une même catégorie et est basée sur une direction d'approche de l'objet.

2. Appareil selon la revendication 1, dans lequel l'unité de commande de dispositif d'affichage commande le dispositif d'affichage pour afficher une image agrandie de la partie de la pluralité d'icônes sélectionnables lorsque l'unité de détermination d'approche d'objet détermine que l'objet est près du dispositif d'affichage mais ne touche pas le dispositif d'affichage.

3. Appareil selon la revendication 1, dans lequel l'unité de commande de dispositif d'affichage commande le dispositif d'affichage pour afficher des images de flèche (43) pour chaque direction d'approche de la pluralité de directions d'approche de l'objet.

4. Appareil selon la revendication 1, dans lequel l'unité de commande de dispositif d'affichage commande le dispositif d'affichage pour afficher un titre de catégorie avec chacune des images de flèche pour chaque direction d'approche de la pluralité de directions d'approche disponibles de l'objet, chaque titre de catégorie nommant une catégorie à laquelle au moins une icône sélectionnable de la pluralité d'icônes sélectionnables appartient, et l'unité de commande de dispositif d'affichage commande le dispositif d'affichage pour afficher chacune des icônes sélectionnables dans une catégorie correspondant à une direction d'approche actuelle de l'objet.

5. Appareil selon la revendication 4, dans lequel la pluralité de directions d'approche disponibles de l'objet comprennent une direction perpendiculaire à une surface inférieure du dispositif d'affichage et des directions perpendiculaires à chacune des surfaces latérales du dispositif d'affichage.

6. Appareil selon la revendication 1, dans lequel l'unité de commande de dispositif d'affichage commande le dispositif d'affichage pour réarranger la pluralité d'icônes sélectionnables sur le dispositif d'affichage lorsque l'unité de détermination d'approche d'objet détermine que l'objet est près du dispositif d'affichage mais ne touche pas le dispositif d'affichage.

7. Appareil selon la revendication 6, dans lequel, dans un deuxième mode d'affichage, l'unité de commande de dispositif d'affichage commande le dispositif d'affichage pour réarranger la pluralité d'icônes sélectionnables sur le dispositif d'affichage le long d'un trajet de l'objet lorsque l'unité de détermination d'approche d'objet détermine que l'objet passe le long du trajet près du dispositif d'affichage mais ne touche pas le dispositif d'affichage.

8. Appareil selon la revendication 6, dans lequel, dans un troisième mode d'affichage, l'unité de commande de dispositif d'affichage commande le dispositif d'affichage pour réarranger la pluralité d'icônes sélectionnables sur le dispositif d'affichage à distance d'un emplacement de l'objet lorsque l'unité de détermination d'approche d'objet détermine que l'objet est près du dispositif d'affichage mais ne touche pas le dispositif d'affichage.

9. Procédé consistant :
à déterminer, à l'aide d'un processeur (14), une approche d'un objet sur la base de données reçues ; et
à commander un dispositif d'affichage (12) pour afficher une pluralité d'icônes sélectionnables (41), la commande consistant à changer l'affichage de la pluralité d'icônes sélectionnables pour afficher seulement une partie de la pluralité d'icônes sélectionnables lorsque la détermination détermine que l'objet est près du dispositif d'affichage, **caractérisé en ce que** la partie de la pluralité d'icônes sélectionnables est un sous-ensemble d'icônes sélectionnables appartenant toutes à une même catégorie et est basée sur une direction d'approche de l'objet.

10. Support de stockage non transitoire lisible par ordinateur codé avec un programme d'ordinateur qui, lorsqu'il est chargé sur un processeur (14), contraint le processeur à exécuter un procédé consistant :
à déterminer une approche d'un objet sur la base de données reçues ; et
à commander un dispositif d'affichage (12) pour afficher une pluralité d'icônes sélectionnables (41), la commande consistant à changer l'affichage de la pluralité d'icônes sélectionnables pour afficher seulement une partie de la pluralité d'icônes sélectionnables lorsque la détermination détermine que l'objet est près du dispositif d'affichage, **caractérisé en ce que** la partie de la pluralité d'icônes sélectionnables est un sous-ensemble d'icônes sélectionnables appartenant toutes à une même catégorie et est basée sur une direction d'approche de l'objet.
